# EUROPEAN PATENT APPLICATION

(11) **EP 4 470 854 A1**
(43) Date of publication of application: **04.12.2024**
(21) Application number: 24152788.6
(22) Date of filing: 19.01.2024
(51) Int. Cl.: B60T 13/74, F16D 55/227, F16D 65/18, F16D 125/40, F16D 121/24

(54) **BRAKE APPARATUS FOR VEHICLE**

(30) Priority: 01.06.2023 KR 20230070934
(71) Applicant: Hyundai Mobis Co., Ltd., Gangnam-gu Seoul 06141 (KR)
(72) Inventor: CHO, Sung Ho, Gyeonggi-do (KR); KIM, Jin Woo, Gyeonggi-do (KR); KWON, Chan, Gyeonggi-do (KR); CHOI, In Seok, Gyeonggi-do (KR); HA, Woong Bin, Gyeonggi-do (KR); JEON, Hyoung Gu, Gyeonggi-do (KR)
(74) Representative: Vossius & Partner Patentanwälte Rechtsanwälte mbB

(57) **Abstract**

A brake apparatus (1) for a vehicle, the brake apparatus (1) including a brake pad (100) configured to pressurize a brake disc (10), a screw bar (200) positioned inside a caliper body (20) and rotated by receiving power from a motor part (30), a piston (300) configured to pressurize the brake pad (100), and a nut (400) rectilinearly moved due to a rotation of the screw bar (200), positioned inside the piston (300), and provided with a plurality of air discharge grooves(423), which are disposed to be spaced apart from each other to discharge air present inside the piston (300), and an air passage groove (424) which connects the plurality of air discharge grooves (423).

## Description

### BACKGROUND

### FIELD

Exemplary embodiments of the present disclosure relate to a brake apparatus for a vehicle, and more specifically, to a brake apparatus for a vehicle in which a defective rate is significantly reduced.

### DISCUSSION OF THE RELATED ART

Generally, an electronic parking brake (EPB) of a vehicle converts a rotating force of a driving motor into rectilinear movement using a screw and nut mechanism to pressurize a piston. The pressurized piston presses a brake pad, which is a friction material, onto a wheel disc, thereby generating a braking force.

When a piston and a nut are assembled, an air discharge groove is formed in the nut to discharge air present between the piston and the nut and fill oil therebetween.

In this case, the air discharge groove includes a first air discharge groove and a second air discharge groove, and the first air discharge groove positioned on an upper surface and the second air discharge groove positioned on a side surface are integrally connected. However, since the first air discharge groove and the second air discharge groove should be machined to be positioned exactly on the same line, there is a problem in that a machining process is difficult, there is a high probability that a defective rate may occur during the machining process, and an appearance defect and a burr may occur. Therefore, there is a need to solve such a problem.

The background technology of the present invention is disclosed in Korean Registered Patent No. 10-1220294 (entitled: Electronic Disc Brake, and registered on January 3, 2013).

### SUMMARY

Various embodiments are directed to solving the above described problems, and an object according to one aspect of the present invention is to provide a brake apparatus for a vehicle in which a defective rate is significantly reduced.

In an embodiment, the brake apparatus for a vehicle according to an aspect of the present invention includes a brake pad configured to pressurize a brake disc, a screw bar positioned inside a caliper body and rotated by receiving power from a motor part, a piston configured to pressurize the brake pad, and a nut rectilinearly movable by a rotation of the screw bar, positioned inside the piston, and including a plurality of air discharge grooves, which are disposed to be spaced apart from each other to discharge air present inside the piston, and an air passage groove which connects the plurality of air discharge grooves to each other.

The nut may further include a nut body rectilinearly movable by the rotation of the screw bar, and a nut head connected to the nut body, rectilinearly movable by the rotation of the screw bar, configured to pressurize the piston, and including the plurality of air discharge grooves and the air passage groove.

The nut head may include a pressurizing portion configured to pressurize the piston, and a contact portion connected to the pressurizing portion and disposed to contact an inside of the piston, wherein the plurality of air discharge grooves may include a plurality of first air discharge grooves which are formed on the pressurizing portion and spaced apart from each other.

The plurality of first air discharge grooves may be disposed on a pressurizing surface of the pressurizing portion at equal rotation intervals based on the screw bar.

The plurality of air discharge grooves may include a plurality of second air discharge grooves which are formed on the contact portion and spaced apart from each other.

The plurality of second air discharge grooves may be disposed on a contact surface of the contact portion at equal rotation intervals based on the screw bar.

The plurality of second air discharge grooves may be disposed on circumferential positions corresponding to the plurality of first air discharge grooves, respectively.

The air passage groove may extend along a circumference of the pressurizing portion and may be connected to the plurality of air discharge grooves.

The air passage groove may be connected to the plurality of first air discharge grooves and the plurality of second air discharge grooves.

The air passage groove may be disposed between the plurality of first air discharge grooves and the plurality of second air discharge grooves in an axial direction of the screw bar.

The brake apparatus may further include a sealing part installed on the caliper body and disposed to contact the piston.

### BRIEF DESCRIPTION OF THE DRAWINGS

FIG. 1 is a diagram illustrating a brake apparatus for a vehicle according to one embodiment of the present invention.
FIG. 2 is a diagram illustrating the brake apparatus for a vehicle according to one embodiment of the present invention when viewed from another direction.
FIG. 3 is a cross-sectional view illustrating the brake apparatus for a vehicle according to one embodiment of the present invention.
FIG. 4 is an enlarged view of the main part of FIG. 3.
FIG. 5 is a diagram illustrating that a brake pad pressurizes a brake disc by operations of a screw bar, a nut, and a piston of the brake apparatus for a vehicle according to one embodiment of the present invention.
FIG. 6 is an exploded perspective view illustrating the brake apparatus for a vehicle according to one embodiment of the present invention.
FIG. 7 is a perspective view illustrating the screw bar and the nut of the brake apparatus for a vehicle according to one embodiment of the present invention.
FIG. 8 is a perspective view of FIG. 7 when viewed from the front.
FIG. 9 is a front view of FIG. 7.
FIG. 10 is a perspective view of FIG. 7 when viewed from the rear.

### DETAILED DESCRIPTION OF THE ILLUSTRATED EMBODIMENTS

Hereinafter, a brake apparatus for a vehicle according to one embodiment of the present invention will be described with reference to the accompanying drawings.

Here, thicknesses of lines, sizes of constituent elements, or the like illustrated in the drawings, may be exaggerated for clarity and convenience of description. In addition, the terms described below are defined in consideration of the functions of the present invention, and these terms may be varied according to the intent or custom of a user or an operator. Therefore, these terms should be defined on the basis of the contents throughout the present specification.

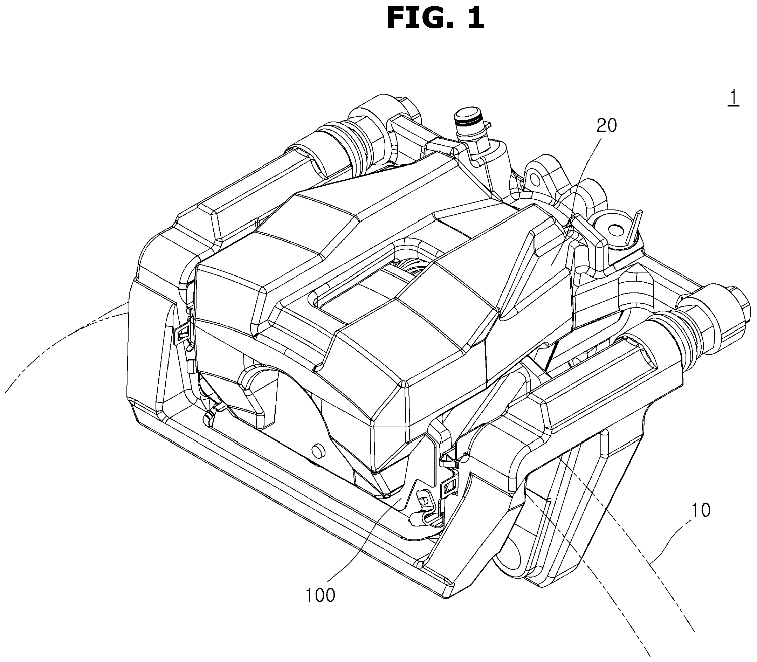

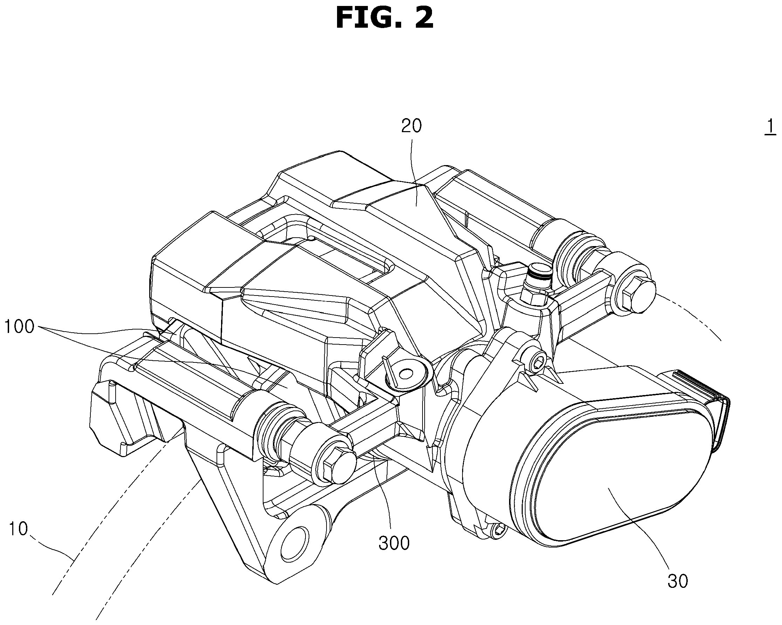

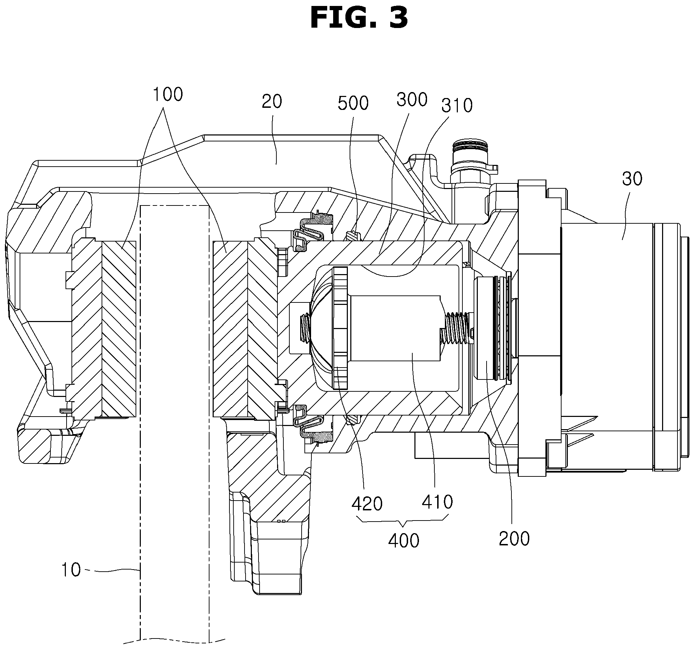

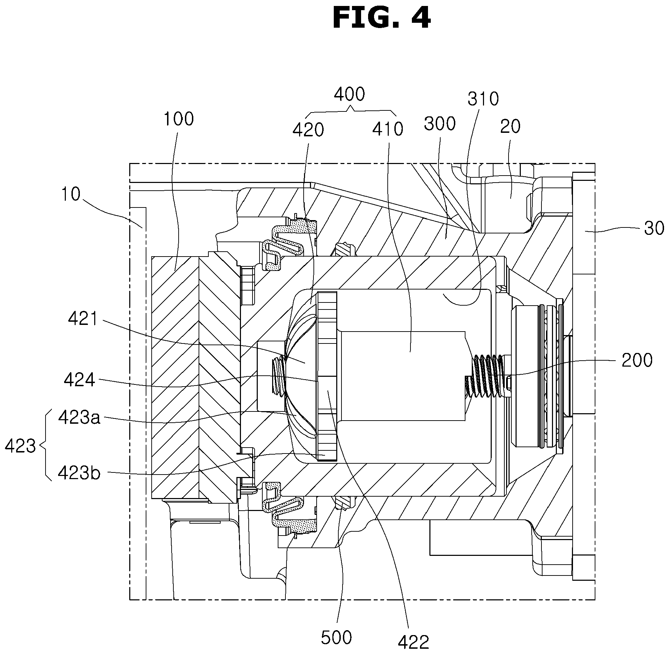

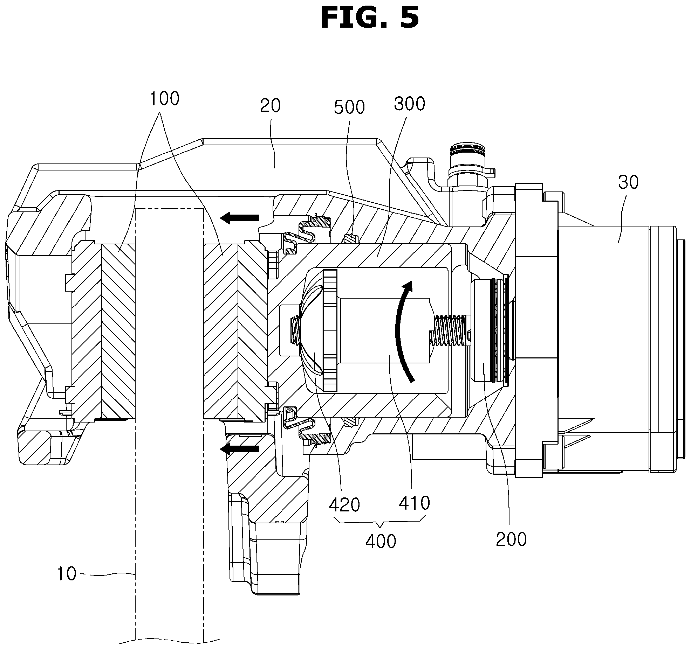

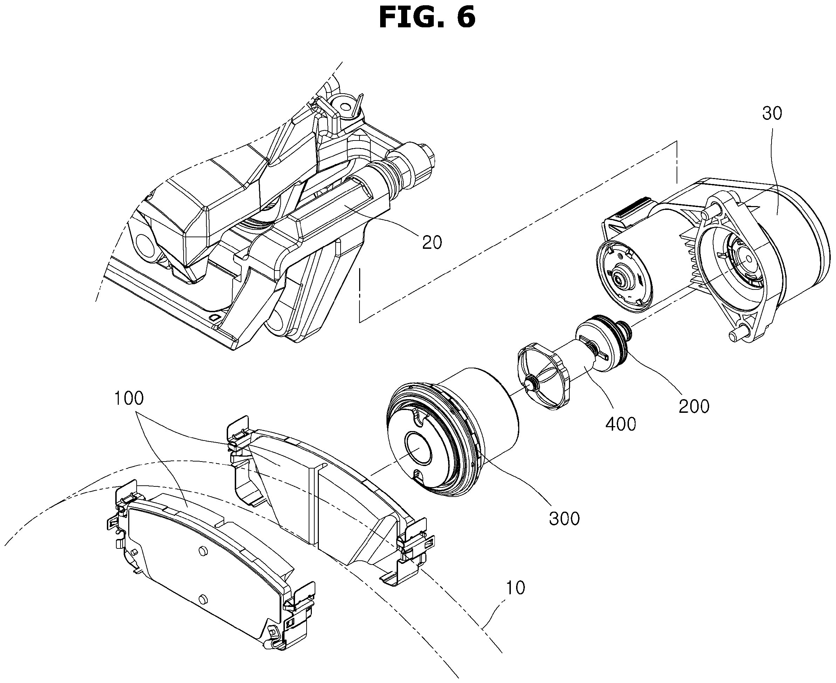

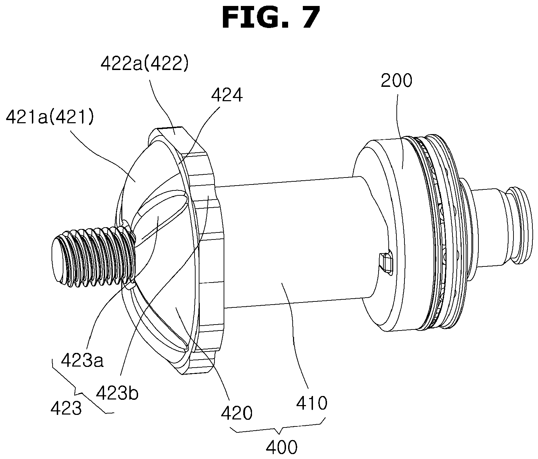

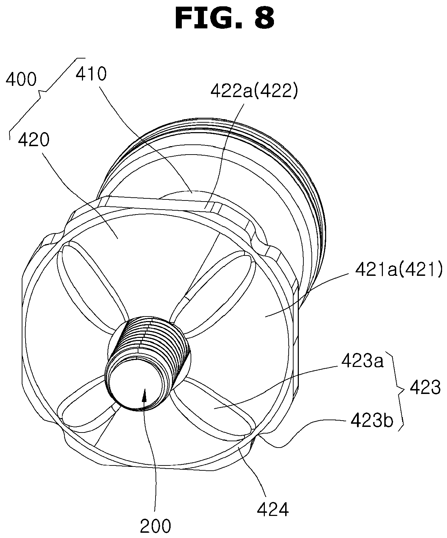

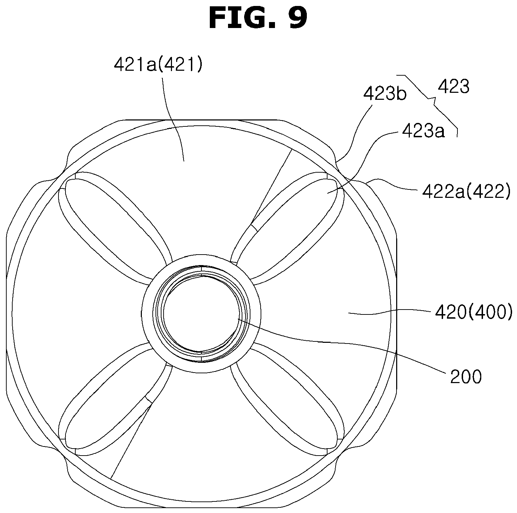

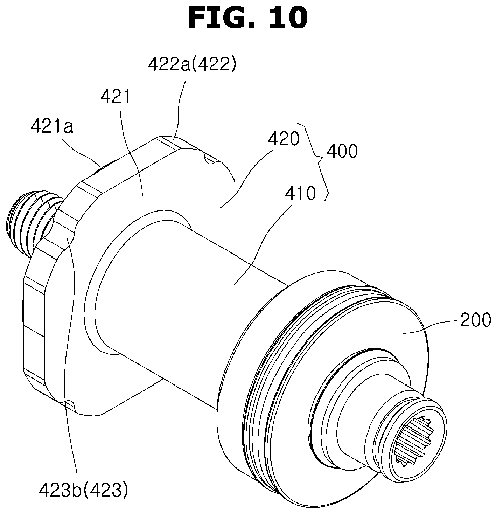

FIG. 1 is a diagram illustrating a brake apparatus for a vehicle according to one embodiment of the present invention, FIG. 2 is a diagram illustrating the brake apparatus for a vehicle according to one embodiment of the present invention when viewed from another direction, FIG. 3 is a cross-sectional view illustrating the brake apparatus for a vehicle according to one embodiment of the present invention, FIG. 4 is an enlarged view of the main part of FIG. 3, FIG. 5 is a diagram illustrating that a brake pad pressurizes a brake disc by operations of a screw bar, a nut, and a piston of the brake apparatus for a vehicle according to one embodiment of the present invention, FIG. 6 is an exploded perspective view illustrating the brake apparatus for a vehicle according to one embodiment of the present invention, FIG. 7 is a perspective view illustrating the screw bar and the nut of the brake apparatus for a vehicle according to one embodiment of the present invention, FIG. 8 is a perspective view of FIG. 7 when viewed from the front, FIG. 9 is a front view of FIG. 7, and FIG. 10 is a perspective view of FIG. 7 when viewed from the rear.

Referring to FIGS. 1 to 10, a brake apparatus 1 for a vehicle according to one embodiment of the present invention includes brake pads 100, a screw bar 200, a piston 300, and a nut 400. The brake pads 100 squeeze the brake disc 10.

The screw bar 200 is positioned inside the caliper body 20 and rotated by receiving power from a motor part 30. The motor part 30 may include a motor (not shown) and a plurality of gears (not shown).

One of the plurality of gears is connected to the motor, and the other thereof is connected to the screw bar 200. The gear receives a rotating force from the motor to rotate the screw bar 200. In this case, the screw bar 200 has a rod shape, is provided with a male screw thread (not shown) on an outer side thereof, and is rotated by receiving a rotating force of the motor.

The piston 300 pressurizes the brake pad 100. The piston 300 has a shape surrounding an outer side of the nut 400, which will be described below, and is moved together with the nut 400 to pressurize the brake pad 100.

The piston 300 has an installation groove 310 in which the nut 400 is disposed. In this case, the nut 400 may be moved in a left-right direction (based on FIGS. 3 to 5) along the installation groove 310 of the piston 300.

The nut 400 is rectilinearly moved due to a rotation of the screw bar 200 and positioned inside the piston 300. A female screw thread engaged with the male screw thread of the screw bar 200 is provided inside the nut 400, and a rotation of the nut 400 is restricted by the screw bar 200.

That is, the nut 400 may be moved on the installation groove 310 of the piston 300 in the left-right direction (based on FIGS. 3 to 5) according to the rotation of the screw bar 200.

The rotation of the nut 400 is restricted in the rotation direction of the screw bar 200, and when the nut 400 receives the rotating force from the screw bar 200, the nut 400 converts the rotating force of the screw bar 200 into rectilinear movement. The nut 400 is moved together with the piston 300 and allows the piston 300 to pressurize or depressurize the brake pad 100.

Specifically, when the screw bar 200 is rotated in a setting direction, the nut 400 is moved together with the brake pad 100 in a left direction of the brake pad 100 (based on FIGS. 3 to 5), that is, moved toward the brake disc 10, to pressurize the brake pad 100 so that a braking force may be generated.

Thereafter, when the screw bar 200 is rotated in a direction opposite to the setting direction, the nut 400 is moved together with the brake pad 100 in a right direction of the brake pad 100 (based on FIGS. 3 to 5), that is, moved in a side opposite to the brake disc 10 to be spaced apart from the brake pad 100, to depressurize the brake pad 100 so that the braking force may be released.

The nut 400 is provided with a plurality of air discharge grooves 423 which are disposed to be spaced apart from each other and discharge air present inside the piston 300, and an air passage groove 424 which connects the plurality of air discharge grooves 423.

The nut 400 may include a nut body 410 and a nut head 420 (see FIGS. 4 and 6 to 10). The nut body 410 may be rectilinearly moved due to the rotation of the screw bar 200.

The nut head 420 may be connected to the nut body 410, may be rectilinearly moved due to the rotation of the screw bar 200, may pressurize the piston 300, and may be provided with the plurality of air discharge grooves 423 and the air passage grooves 424.

A diameter of the nut head 420 is greater than a diameter of the nut body 410. The nut head 420 may include a pressurizing portion 421, a contact portion 422, the plurality of air discharge grooves 423, and the air passage groove 424.

The pressurizing portion 421 may pressurize the piston 300. The pressurizing portion 421 has a rounded shape, and a diameter of the pressurizing portion 421 becomes smaller toward the brake pad 100.

The pressurizing portion 421 is provided with a pressurizing surface 421a which pressurizes the piston 300. First air discharge grooves 423a of the air discharge grooves 423 are formed on the pressurizing surface 421a in a circumferential direction to be spaced apart from each other at equal rotation intervals based on the screw bar 200.

The contact portion 422 is connected to the pressurizing portion 421 and is brought into contact with an inside of the piston 300. The contact portion 422 is provided with a contact surface 422a which is brought into contact with the installation groove 310 of the piston 300. Second air discharge grooves 423b of the air discharge grooves 423 are formed on the contact surface 422a to be spaced apart from each other in the circumferential direction.

The plurality of air discharge grooves 423 are formed in the pressurizing portion 421 and the contact portion 422 to be spaced apart from each other. The plurality of air discharge grooves 423 may include a plurality of first air discharge grooves 423a and a plurality of second air discharge grooves 423b. The plurality of first air discharge grooves 423a are formed on the pressurizing surface 421a of the pressurizing portion 421 to be spaced apart from each other in the circumferential direction and are connected to the air passage groove 424 which will be described below.

The plurality of first air discharge grooves 423a are formed on the pressurizing surface 421a of the pressurizing portion 421 to be spaced apart from each other and are disposed to be long in a radial direction of the pressurizing surface 421a. One end portion of the first air discharge groove 423a is connected to the air passage groove 424.

The plurality of second air discharge grooves 423b are formed in the contact portion 422 to be spaced apart from each other in the circumference direction, face the first air discharge grooves 423a, and are connected to the air passage groove 424. The second air discharge groove 423b may be disposed to be offset from the first air discharge groove 423a. The second air discharge grooves 423b are formed on the contact surface 422a of the contact portion 422 to be spaced apart from each other in the circumference direction, and one end portions of the second air discharge grooves 423b are connected to the air passage groove 424.

The air passage groove 424 is formed along the circumference of the pressurizing portion 421 and connects the plurality of air discharge grooves 423. The air passage groove 424 has a ring shape, is positioned between the plurality of first air discharge grooves 423a and the plurality of second air discharge grooves 423b, and connects the plurality of first air discharge grooves 423a and the plurality of second air discharge grooves 423b. In one embodiment, the air passage groove 424 is disposed between the plurality of first air discharge grooves 423a and the plurality of second air discharge grooves 423b in an axial direction of the screw bar 200.

In this way, since the plurality of air discharge grooves 423, that is, the plurality of first air discharge grooves 423a and the plurality of second air discharge grooves 423b, are connected to each other through the air passage groove 424, even when the plurality of air discharge grooves 423, that is, the first air discharge grooves 423a and the second air discharge grooves 423b, are disposed to be offset from each other, air present inside the piston 300 may be easily discharged through the air discharge grooves 423 and the air passage groove 424. Consequently, a defect occurrence rate can be significantly reduced.

The brake apparatus 1 for a vehicle may further include a sealing part 500. The sealing part 500 is installed on the caliper body 20 and is in contact with the piston 300. Various types of sealing parts 500 may be used within a technical spirit of damping and air tightness operations. The sealing part 500 is installed in a sealing groove (not shown) of the caliper body 20 facing the piston 300.

As described above, in the brake apparatus 1 for a vehicle according to the present invention, even when the plurality of air discharge grooves 423 are machined to be offset from each other in the nut 400, the air discharge grooves 423 may perform an air discharge function through the air passage groove 424 so that a defect occurrence rate can be significantly reduced.

In accordance with a brake apparatus for a vehicle according to the present invention, even when a plurality of air discharge grooves are machined to be offset from each other in a nut, the air discharge grooves can perform an air discharge function through an air passage groove so that a defect occurrence rate can be significantly reduced.

While the present invention has been described with reference to the embodiments shown in the drawings, these embodiments are merely illustrative and it should be understood that various modifications and equivalent other embodiments can be derived by those skilled in the art on the basis of the embodiments.

Accordingly, the technical scope of the present invention should be determined by the following claims.

## Claims

1. A brake apparatus for a vehicle, comprising:
a brake pad configured to pressurize a brake disc;
a screw bar positioned inside a caliper body and rotated by receiving power from a motor part;
a piston configured to pressurize the brake pad; and
a nut rectilinearly movable by a rotation of the screw bar, positioned inside the piston, and including a plurality of air discharge grooves, which are disposed to be spaced apart from each other to discharge air present inside the piston, and an air passage groove which connects the plurality of air discharge grooves to each other.

2. The brake apparatus for the vehicle of claim 1, wherein the nut further includes:
a nut body rectilinearly movable by the rotation of the screw bar; and
a nut head connected to the nut body, rectilinearly movable by the rotation of the screw bar, configured to pressurize the piston, and including the plurality of air discharge grooves and the air passage groove.

3. The brake apparatus for the vehicle of claim 2, wherein the nut head further includes:
a pressurizing portion configured to pressurize the piston; and
a contact portion connected to the pressurizing portion and disposed to contact an inside of the piston,
wherein the plurality of air discharge grooves include a plurality of first air discharge grooves which are formed on the pressurizing portion and spaced apart from each other.

4. The brake apparatus for the vehicle of claim 3, wherein the plurality of first air discharge grooves are disposed on a pressurizing surface of the pressurizing portion at equal rotation intervals based on the screw bar.

5. The brake apparatus for the vehicle of claim 3 or 4, wherein the plurality of air discharge grooves include a plurality of second air discharge grooves which are formed on the contact portion and spaced apart from each other.

6. The brake apparatus for the vehicle of claim 5, wherein the plurality of second air discharge grooves are disposed on a contact surface of the contact portion at equal rotation intervals based on the screw bar.

7. The brake apparatus for the vehicle of claim 5 or 6, wherein the plurality of second air discharge grooves are disposed on circumferential positions corresponding to the plurality of first air discharge grooves, respectively.

8. The brake apparatus for the vehicle of any one of claims 5 to 7, wherein the air passage groove extends along a circumference of the pressurizing portion and is connected to the plurality of air discharge grooves.

9. The brake apparatus for the vehicle of claim 8, wherein the air passage groove is connected to the plurality of first air discharge grooves and the plurality of second air discharge grooves.

10. The brake apparatus for the vehicle of claim 8 or 9, wherein the air passage groove is disposed between the plurality of first air discharge grooves and the plurality of second air discharge grooves in an axial direction of the screw bar.

11. The brake apparatus for the vehicle of any one of claims 3 to 10, further comprising:
a sealing part installed on the caliper body and disposed to contact the piston.
